Europäisches Patentamt

European Patent Office

Office européen des brevets

(19)

(11) Veröffentlichungsnummer: **0 192 134**
A2

(12) ## EUROPÄISCHE PATENTANMELDUNG

(21) Anmeldenummer: 86101582.4

(22) Anmeldetag: 07.02.86

(51) Int. Cl.⁴: **B 29 C 45/42**

(30) Priorität: 20.02.85 DE 3505836

(43) Veröffentlichungstag der Anmeldung:
27.08.86 Patentblatt 86/35

(84) Benannte Vertragsstaaten:
AT BE CH DE FR GB IT LI LU NL SE

(71) Anmelder: Battenfeld Maschinenfabriken GmbH
Scherl 10 Postfach 1164/1165
D-5882 Meinerzhagen 1(DE)

(72) Erfinder: Henze, Hans-Joachim
Ketteler Weg 9
D-5942 Kirchhundem 4(DE)

(74) Vertreter: Müller, Gerd et al,
Patentanwälte
HEMMERICH-MÜLLER-GROSSE-POLLMEIER
Hammerstrasse 2
D-5900 Siegen 1(DE)

(54) Spritzgiessmaschine mit Spritzling-Entnahmevorrichtung.

(57) Eine Spritzgießmaschine wird mit einer Spritzling-Entnahmevorrichtung ausgerüstet, die es ermöglicht, aus dem geöffneten Spritzwerkzeug die Spritzlinge zu entfernen. An einem im wesentlichen quer zur Betätigungsrichtung der Schließeinheit 1 für das Spritzwerkzeug ausgerichteten Führungsbett 7 sitzt verfahrbar ein Schlitten 8, der am unteren Ende eines sowohl in Aufwärtsrichtung als auch in Betätigungsrichtung der Schließeinheit 1 verstellbaren Hängegliedes 10 einen Greifer 11 trägt, welcher wiederum um mindestens zwei rechtwinklig zueinander gerichtete Gelenke 12 und 14 relativ zum Hängeglied 10 verstellbar ist. Das Hängeglied 10 besteht aus einem als Kardan- bzw. Ellipsenlenker oder aber als Pantograph ausgelegten Geradführungs-Koppelgetriebe 16, 17, dessen Schiebeführung am Schlitten 8, 9 quer zu seiner eigenen Bewegungsrichtung 23 ausgerichtet ist.

./...

EP 0 192 134 A2

Fig. 1

## Spritzgießmaschine mit Spritzling-Entnahmevorrichtung

Die Erfindung betrifft eine Spritzgießmaschine mit einer, beispielsweise auf der ortsfesten Werkzeugträgerplatte der Schließeinheit adaptierten Vorrichtung zur Spritzling-Entnahme aus dem geöffneten Spritzwerkzeug, bei welcher an einem zur Schließeinheit ausgerichteten Führungsbett ein Schlitten verfahrbar sitzt, der am freien Ende eines als Viergelenk-Koppelgetriebe ausgeführten, sowohl in Betätigungsrichtung der Schließeinheit als auch im wesentlichen quer dazu verstellbaren Stellgliedes einen Spritzling-Greifer trägt, welcher wiederum relativ zum Stellglied winkelverstellbar ist.

Eine Spritzling-Entnahmevorrichtung dieser Art ist bekannt durch die DE-A 21 47 436.

Das Viergelenk-Koppelgetriebe dieser bekannten Spritzling-Entnahmevorrichtung arbeitet in horizontaler Ebene und ist seitlich an der ortsfesten Werkzeugträgerplatte der Schließeinheit adaptiert, so daß es relativ zu dieser in Seitwärtsrichtung bewegt werden kann. Der Führungsschlitten, welcher das als Viergelenk-Koppelgetriebe ausgelegte Stellglied trägt, sitzt auf einem parallel zur Betätigungsrichtung der Schließeinheit ausgerichteten Führungsbett. Als Antriebsvorrichtung für das Viergelenk-Koppelgetriebe dient eine Kurbel, die über einen Winkelbereich von etwa 250° um eine ortsfeste Kurbelachse hin und her schwenkbar ist. Diese Ausgestaltung des Viergelenk-Koppelgetriebes hat zur Folge, daß der von ihm getragene Spritzling-Greifer nicht in Kartesischen bzw. rechtwinkligen Koordinaten verfahren werden kann, sondern nur eine Bewegung auf einer S-förmigen Bahn ermöglicht.

Nach bei der bekannten Spritzling-Entnahmevorrichtung ist daher, daß sie nicht ohne weiteres als frei programmiertes Gerät zum Einsatz gelangen kann, wie dies bei Spritzgießmaschinen erforderlich ist, die in beliebiger Aufeinanderfolge zur Fertigung erheblich unterschiedlicher Spritzformteile eingesetzt werden.

Für einen frei programmierbaren Einsatz wäre bei der bekannten Spritzling-Entnahmevorrichtung nicht nur eine zusätzliche Bewegungsachse für das den Spritzling-Greifer tragende Stellglied notwendig, sondern es müßten für die Bewegungsmöglichkeit in Kartesischen bzw. rechtwinkligen Koordinaten durch hohen und extrem zeitintensiven Rechenaufwand interpolierende Bahnvorgaben ermittelt werden, woraus entweder geringe Arbeitsgeschwindigkeiten oder aber relativ große Bahnabweichungen resultieren.

Aufgrund dieser Nachteile sind auch bereits Spritzling-Entnahmevorrichtungen an Spritzgießmaschinen bekannt geworden, die mit einem entlang einem Führungsbett verfahrbaren Kreuzsupport arbeiten, welcher einen hohen technischen Aufwand erfordert und außerdem ein beträchtliches Konstruktionsgewicht bedingt. Der entlang dem, bspw. auf der ortsfesten Werkzeugträgerplatte der Schließeinheit, an der Spritzgießmaschine adaptierten Führungsbett verfahrbare Schlitten des Kreuzsupport erfordert hier quer zu seiner eigenen Bewegungsrichtung relativ große bauliche Abmessungen, weil er selbst wiederum mit einem Führungsbett für den zweiten Schlitten versehen werden muß, an welchem das den Spritzling-Greifer tragende, als Hängeglied ausgebildete Stellglied wiederum über einen Schlitten verfahrbar ist.

Es liegt auf der Hand, daß sich auch bei der Ausstattung von Spritzgießmaschinen mit diesen bekannten Spritzling-Entnahmevorrichtungen häufig Schwierigkeiten ergeben, weil nicht nur das hohe Konstruktionsgewicht derselben in die Spritzgießmaschine eingeleitet werden muß, sondern über einen Bereich hinweg, der in der Regel wesentlich breiter als die Spritzgießmaschine selbst ist, oberhalb der Spritzgießmaschine auch noch ein Freiraum beträchtlicher Höhe verfügbar sein muß.

Der Erfindung liegt die Aufgabe zugrunde, für Spritzgießmaschinen eine Spritzling-Entnahmevorrichtung der eingangs näher erläuterten Gattung zu schaffen, die bei geringem Konstruktionsgewicht nicht nur im Bereich der Spritzgießmaschine mit minimalem Einbau- bzw. Freiraum auskommt, wenn Sie bspw. auf die ortsfeste Werkzeugträgerplatte der zur Spritzgießmaschine gehörenden Schließeinheit adaptiert wird, sondern zugleich auch mit einfacher Bewegungssteuerung ein exaktes und zugleich schnelles Arbeiten sicherstellt. Es soll dadurch die Betätigung der Schließeinheit der Spritzgießmaschine, also der Zeitabstand zwischen dem Öffenen und dem Schließen des Spritzwerkzeuges wesentlich beschleunigt und folglich eine Produktionssteigerung der Spritzgießmaschine erreicht werden.

Gelöst wird diese Aufgabe nach der Erfindung mit den Kennzeichnungsmerkmalen des Anspruchs 1 dadurch, daß das Viergelenk-Koppelgetriebe bzw. Stellglied von einem als Kardan- bzw. Ellypsenlenker oder als Pantograph ausgelegten Geradführungs-Koppelgetriebe gebildet ist, dessen Schiebeführung am Schlitten quer zur Bewegungsrichtung seines freien, den Greifer tragenden Endes ausgerichtet ist.

Bei Anwendung dieser Maßnahmen ergibt sich der Vorteil, daß der längs dem Führungsbett verfahrbare Schlitten nur als einfacher, nur längs beweglicher Schlitten ausgeführt werden muß, dessen Bauhöhe die Bauhöhe des Führungsbettes nur geringfügig überschreitet, und der als Aufhängung für das Stellglied nur einen baulich leichten Ausleger benötigt, dessen Länge den Arbeitsbereich der Schließeinheit nicht überschreitet. Als Antrieb für das Geradführungs-Koppelgetriebe können leichte und außerdem exakt und schnell arbeitende Kolben-Zylinder-Einheiten benutzt werden, weil sich der jeweilige Bewegungsbereich für den Spritzling-Greifer exakt und einfach durch Stellanschläge bestimmen läßt. Die Antriebe für die Bewegungen des Spritzling-Greifers in Kartesischen bzw. rechtwinkligen Koordinaten lassen sich besonders einfach steuern und ermöglichen so problemlos den Einstatz als frei programmierbare Geräte.

Ein weiterbildendes Erfindungsmerkmal besteht nach Anspruch 2 ferner darin, daß der den Spritzling-Greifer tragende Arm in seiner Längsrichtung mehrfach abgewinkelt bzw. verkröpft ausgebildet ist und dabei sämtliche Abwinklungen in der Bewegungsebene des Geradführungs-Koppelgetriebes liegen. Durch diese Maßnahme kann in besonders vorteilhafter Weise das Eintauchen und Ausheben des Greifers im Bereich des Öffnungsspaltes zwischen den beiden Hälften des Spritzwerkzeuges begünstigt werden.

Da es vielfach bedeutsam ist, daß der Spritzling-Greifer wenigstens während bestimmter Bewegungsphasen eine gleichbleibende Raumlage beibehält, besteht nach Anspruch 3 ein weiteres Erfindungsmerkmal auch darin, daß dem den Spritzling-Greifer tragenden Arm zusätzliche Gestängeglieder zur Bildung einer Greifer-Parallelführung zugeordnet sind. Während der Bewegung des Geradführungs-Koppelgetriebes wird auf dieses Art und Weise der Spritzling-Greifer völlig selbsttätig in der ihm vorgegebenen Raumlage gehalten.

Damit sich die Position des Spritzling-Greifers verhältnismäßig einfach und sicher auf die unterschieliche Auslegung verschiedener Spritzwerkzeuge abstimmen läßt, hat es sich erfindungsgemäß besonders bewährt, wenn gemäß Anspruch 4 der schlittenseitige, ortsfeste Systempunkt des Geradführungs-Koppelgetriebes an einem Ende der Schieberführung desselben sitzt und daß dabei die Schieberführung zusammen mit dem ortsfesten Systempunkt in Richtung der Bewegungsebene des Geradführungs-Koppelgetriebes am Schlitten verlagerbar und feststellbar angeordnet ist. Selbstverständlich muß in diesem Falle die Schieberführung dann auch als Träger für den Stellantrieb des Geradführungs-Koppelgetriebes, z.B. eine Kolben-Zylinder-Einheit, bilden, damit bei einer Verlagerung der Schieberführung am Schlitten keine Verlagerung der Systempunkte des Geradführungs-Koppelgetriebes zueinander stattfindet.

Schließlich wird erfindungsgemäß nach Anspruch 5 noch in Vorschlag gebracht, daß die Schieberführung und der ortsfeste Systempunkt des Geradführungs-Koppelgetriebes um eine zur Längsrichtung der Schieberführung parallele Achse am Schlitten winkelverlagerbar und feststellbar aufgehängt sind, damit im Bedarfsfalle das Geradführungs-Koppelgetriebe auch in einer gegen die Vertikale geneigten Bewegungsebene arbeiten kann.

Weitere Merkmale und Vorteile des Gegenstandes der Erfindung werden nachfolgend anhand der Zeichnung ausführlich erläutert. Hierbei zeigt

Figur 1    in räumlicher Ansichtsdarstellung den erfindungswesentlichen Bereich einer Spritzgießmaschine mit zugeordneter Spritzling-Entnahmevorrichtung,

Figur 2    in schematisch vereinfachter Seitenansicht das Bauund Funktionsprinzip des bei der Spritzling-Entnahmevorrichtung nach Fig. 1 in Benutzung genommenen, nach dem Kardan- bzw. Ellipsenlenker-Prinzip arbeitenden Geradführungs-Koppelgetriebe,

Figur 3   in einer der Fig. 2 ähnlichen, vereinfachten Prinzipdarstellung den Aufbau und die Wirkungsweise einer Spritzling-Entnahmevorrichtung für Spritzgießmaschinen mit einem Geradführung-Koppelgetriebe nach Art eines Pantographen,

Figur 4   einen abgewandelten Teilbereich des als Pantograph ausgelegten Geradführungs-Koppelgetriebes nach Fig. 3 und

Figur 5   eine weitere bauliche Abwandlung des als Pantograph ausgelegten Geradführungs-Koppelgetriebes nach Fig. 3.

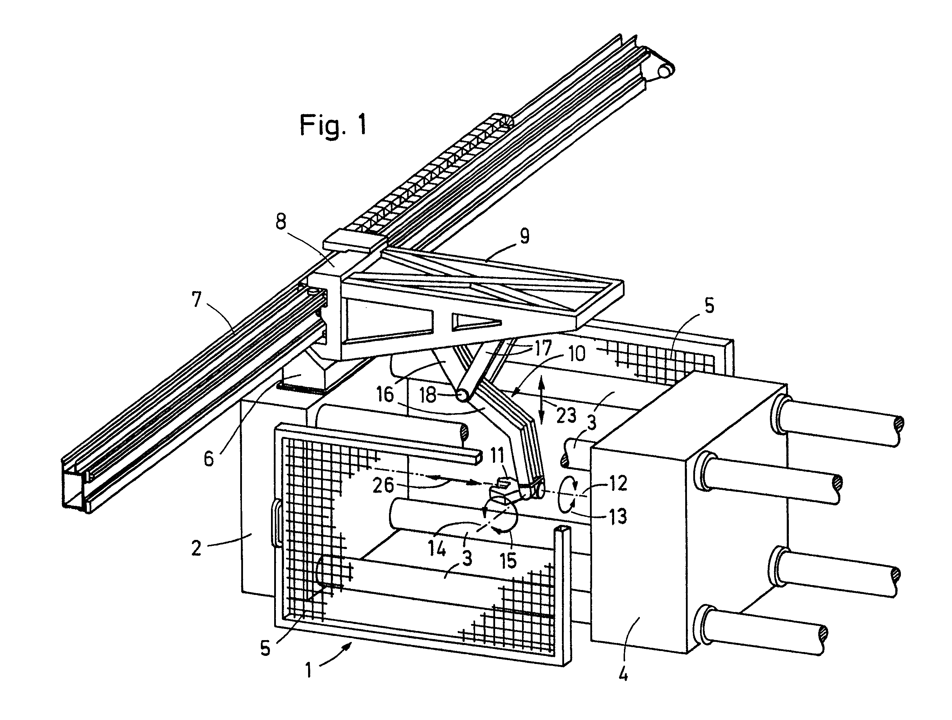

In Fig. 1 der Zeichnung ist von einer Spritzgießmaschine zur Herstellung von Spritzlingen aus Kunststoff der Einfachheit halber nur die Schließeinheit 1 für das Spritzwerkzeug gezeigt. Diese Schließeinheit 1 besteht dabei aus der ortsfesten Werkzeugträgerplatte 2 und der relativ dazu entlang von vier Führungsstangen 3 horizontal beweglichen Werkzeugträgerplatte 4. An der ortsfesten Werkzeugträgerplatte wird im Bereich zwischen den vier Führungsstangen 3 die feste Formhälfte des Spritzwerkzeuges montiert, während die bewegliche Werkzeugträgerplatte 4 als Halterung für die bewegliche Formhälfte des Spritzwerkzeuges bildet. Nach beiden Seiten hin ist die Schließeinheit 1 für das Spritzwerkzeug in üblicher Weise jeweils durch ein Schutzgitter 5 abgeschirmt, damit ein manueller Eingriff in den Öffnungs- und Schließbereich von Spritzwerkzeug und Schließeinheit unterbunden wird.

Auf der ortsfesten Werkzeugträgerplatte 2 der Schließeinheit 1 ist über einen Adapterfuß 6 ein horizontales Führungsbett 7 montiert, und zwar so, daß es sich parallel zur Aufspannebene der ortsfesten Werkzeugträgerplatte 2 bzw. rechtwinklig zur Betätigungsrichtung der Schließeinheit 1 erstreckt. Das Führungsbett 7 ist dabei so angeordnet und ausgebildet, daß es beidseitig um ein beträchtliches Maß über die Seitenbegrenzung der Schließeinheit 1 bzw. der ortsfesten Werkzeugträgerplatte 2 derselben auskragt.

Entlang des Führungsbettes ist ein Schlitten 8 verfahrbar angeordnet, dessen Bauhöhe die Querschnittshöhe des Führungsbettes 7 nicht oder nur geringfügig überschreitet. Er trägt einen horizontalen Kragarm oder Ausleger 9, der sich zumindest annähernd über die maximale Öffnungsweite der Schließeinheit 1 zwischen den zueinadner parallelen Aufspannflächen der beiden Werkzeugträgerplatten 2 und 4 erstreckt, wie das deutlich der Fig. 1 zu entnehmen ist.

Vom Kragarm bzw. Ausleger 9 geht ein Hängeglied 10 aus, das an seinem unteren Ende mit einem Greifer 11 für die im Spritzwerkzeug hergestellten Spritzlinge ausgestattet ist, der sich einerseits um eine horizontale Längsachse 12 in Richtung des Doppelpfeiles 13 drehen läßt und welche andererseits aber auch um eine horizontale Querachse 14 in Richtung des Doppelpfeiles 15 verschwenkt werden kann.

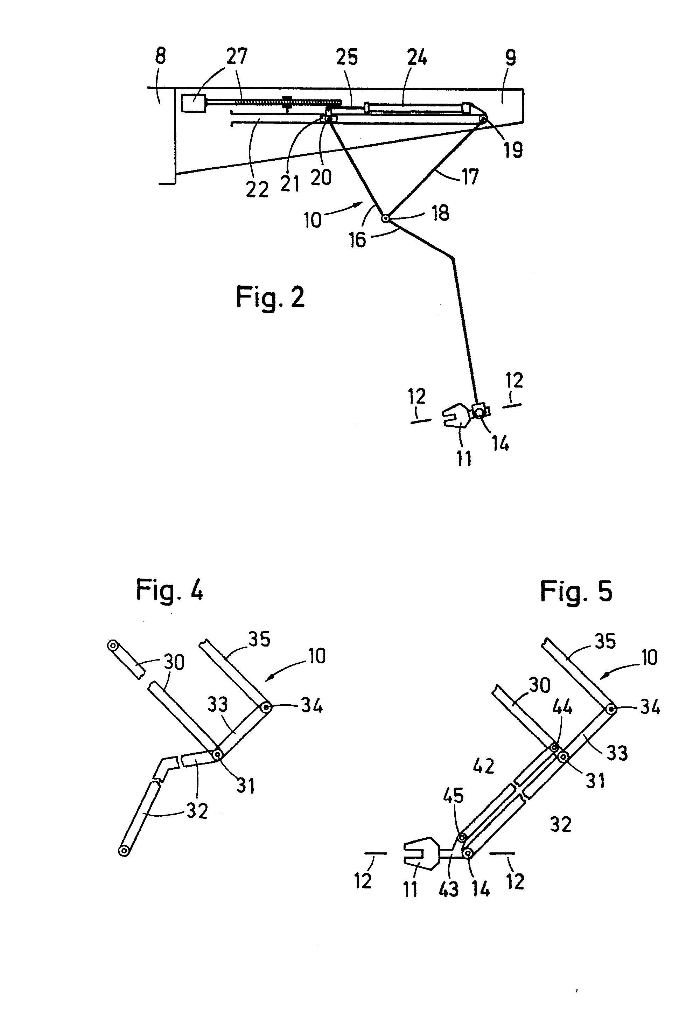

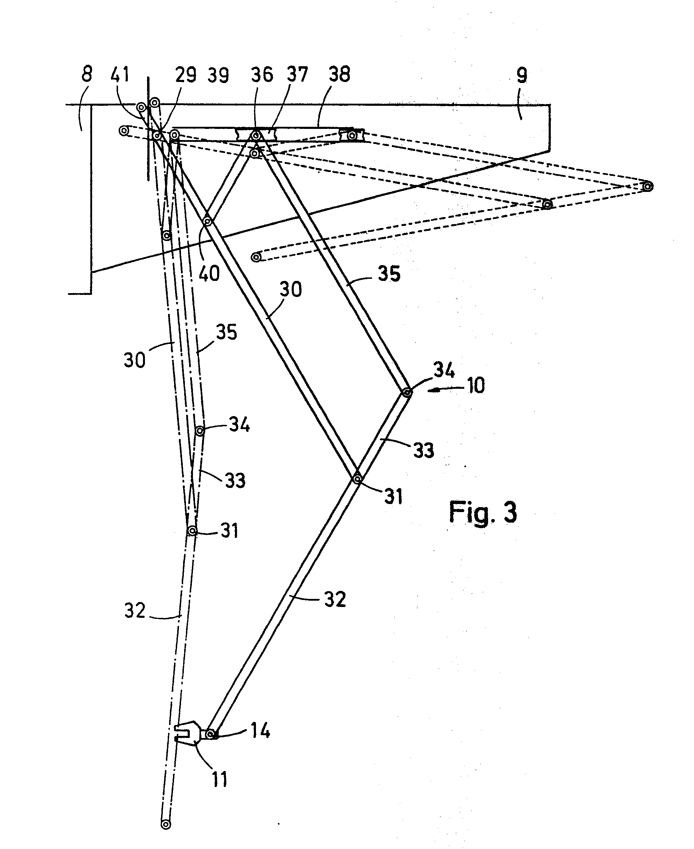

Das Hängeglied 10 wird von einem Hauptlenker 16 und einem Zusatzlenker 17 gebildet, die miteinander über ein Gelenk 18 in Verbindung stehen. Der Zusatzlenker 17 ist wiederum um ein Gelenk 19 ausschließlich schwenkbar am Kragarm oder Ausleger 9 aufgehängt, während der Hauptlenker 16 um ein Gelenk 20 verschwenkbar gelagert ist, das in einem Gleitstein 21 sitzt, der wiederum in einer horizontalen Gleitführung 22 am Kragarm oder Ausleger 9 läuft, wie das deutlich der Fig. 2 entnommen werden kann. Das Hängeglied 10 arbeitet dabei nach dem Prinzip einer zentrischen Schubkurbel, d.h., die Längenverhältnisse einerseits des Zusatzlenkers 17 zwischen seinen beiden Anlenkpunkten 18 und 19 und andererseits der beiden Teillängen des Hauptlenkers 16 zwischen den beiden Gelenken 18 und 20 sowie zwischen dem Gelenk 18 und dem Greifer 11 sind jeweils so gewählt, daß sich entweder die Wirkungsweise des sogenannten Kardanlenker-Prinzips (gleichschenklige zentrische Schubkurbel) oder des Ellipsenlenker-Prinzips (ungleichschenklige zentrische Schubkurbel) einstellt. In beiden Fällen liegt das Kriterium darin, daß das freie, den Greifer 11 tragende Ende des Hauptlenkers 16 eine zumindest annähernd lineare Verlagerungsbewegung in einer Richtung ausführt, die rechtwinklig zur Verschiebebewegung des Gleitsteins 21 in der Gleitführung 22 gerichtet ist und damit vertikal verläuft, wie das in Fig. 1 durch den Doppelpfeil 23 angedeutet ist.

Zur Betätigung des Hängegliedes 10 dient ein Kraftantrieb 24 (Fig. 2), der bspw. als Kolben-Zylinder-Einheit ausgebildet und auf der Gleitführung 22 montiert ist. Die Kolbenstange 25 der Kolben-Zylinder-Einheit 24 greift dabei am Gleitstein 21 an und kann diesen innerhalb vorgegebener Grenzen schnell und zügig in der Gleitführung 22 verlagern. Der Verlagerungsbereich für den Gleitstein 21 in der Gleitführung 22 läßt sich bspw. durch Stellanschläge variieren, so daß hierdurch auch der Arbeitsbereich des Hängegliedes 10 bestimmt wird.

Damit das Hängeglied 10 und mit ihm der Greifer 11 auch Horizontalverlagerungen in der Bewegungsebene des als Geradführungs-Koppelgetriebe wirkenden Hängegliedes 10 in Richtung des Doppelpfeiles 26 in Fig. 1 ausführen kann, ist es vorteilhaft, den an sich ortsfesten Systempunkt des Geradführungs-Koppelgetriebes, also das Gelenk 19 für den Zusatzlenker 17 baulich mit der Gleitführung 22 zu vereinigen und beide gemeinsam parallel zur Längsrichtung der Gleitführung 22 im Kragarm oder Ausleger 9 verschiebebeweglich und feststellbar anzuordnen. Mit der Gleitführung 22 steht dabei ein Verschiebeantrieb 27 in Eingriff, der am Kragarm bzw. Ausleger 9 montiert ist und bspw. mit einem Schraubengetriebe arbeiten kann, das über größere Stellbereiche praktisch stufenlose Verlagerungsbewegungen für die Gleitführung 22 und das Gelenk 19 hervorbringt. Selbstverständlich wäre aber auch denkbar, den Antrieb 27 durch eine Kolben-Zylinder-Einheit zu bilden, wenn es darauf ankommt, die Horizontalverlagerung des Hängegliedes 10 mit dem Greifer 11 jeweils innerhalb festgelegter oder festlegbarer Grenzen schnell und zügig auszuführen.

Sowohl aus Fig. 1 als auch aus Fig. 2 ergibt sich, daß der Hauptlenker 16 des Hängegliedes 10 als in seiner Längsrichtung mehrfach abgewinkelter bzw. verkröpfter Arm ausgebildet werden kann und dabei sämtliche Abwinklungen bzw. Abkröpfungen in seiner Bewegungsebene bzw. der Bewegungsebene des gesamten Geradführungs-Koppelgetriebes liegen. Solche Verkröpfungen des vom Hauptlenker 16 gebildeten Armes erweisen sich vielfach als zweckmäßig, weil hierdurch die Ein- und Ausfahrbewegung für den Greifer im Bereich des Öffnungsspaltes zwischen den beiden Formhälften des Spritzwerkzeuges begünstigt wird.

Aus Fig. 3 geht hervor, daß auch die Möglichkeit besteht, als Hängeglied 10 zum Bewegen des Greifers 11 einen sogenannten Pantographen einzusetzen. Hierbei ist um ein ortsfestes Gelenk 29 am Kragarm bzw. Ausleger 9 ein Lenker 30 verschwenkbar, der über ein Schwenkgelenk 31 einen weiteren Lenker 32 hält, an dessen freiem Ende wiederum der Greifer 11 aufgehängt ist. Der Lenker 32 ist über das ihn mit dem Lenker 30 verbindende Gelenk 31 hinaus mit einer Verlängerung 33 versehen, die über ein Gelenk 34 an einem Koppellenker 35 angreift, der parallel zum Lenker 30 verläuft und wiederum über ein Gelenk 36 an einem Gleitstein 37 aufgehängt ist, der in einer horizontalen Gleitführung 38 läuft, welche am Kragarm oder Ausleger 9 gehalten ist. Ein Koppellenker 39, dessen Längenabmessung der Verlängerung 33 des Lenkers 32 entspricht, greift einerseits am Gelenk 36 zwischen dem Koppellenker 35 und dem Gleitstein 37 an und ist andererseits über ein weiteres Gelenk 40 so mit dem Lenker 30 verbunden, das er Parallellage zur Verlängerung 33 des Lenkers 32 hat. Durch Verschiebeantrieb des Gleitsteins 37 in der Gleitführung 38, der bspw. über eine Kolben-Zylinder-Einheit bewirkt werden kann, läßt sich das nach dem Prinzip eines Pantographen arbeitende Geradführungs-Koppelgetriebe nach Fig. 3 aus der durch voll ausgezogene Linien angedeuteten Zwischenstellung nicht nur in die durch strichpunktierte Linien angedeutete, untere Endstellung, sondern auch bis in die durch gestrichelte Linien angedeutete, obere Endstellung verlagern.

Wenn der Lenker 30 über sein ortsfestes Gelenk 29 hinaus mit einer Verlängerung 41 versehen wird, dann kann an dieser Verlängerung 41 ein Ausgleichsgewicht angreifen, welches die Möglichkeit bietet, den Antrieb für den Gleitstein 37 zumindest weitgehend vom Eigengewicht des Geradführungs-Koppelgetriebes zu entlasten.

In Fig. 4 der Zeichnung ist noch angedeutet, daß der Lenker 32 - ebenso wie der Lenker 16 nach den Fig. 1 und 2 - als in seiner Längsrichtung mehrfach abgewinkelter oder gekröpfter Arm ausgebildet werden kann, bei dem sämtliche Abwinklungen bzw. Verkröpfungen in der Bewegungsebene des gesamten Geradführungskoppelgetriebes liegen.

In Fig. 5 ist andererseits noch gezeigt, daß dem an seinem freien Ende den Greifer 11 tragenden Lenker bzw. Arm 32 auch noch zusätzliche Gestängeglieder 42 und 43 zugeordnet werden können, die eine ständig zwangsläufige Parallelführung für den Greifer 11 gewährleisten. Das Gestängeglied 42 ist dabei über ein Gelenk 44 an den Lenkern 30 angeschlossen und greift über ein weiteres Gelenk 45 am Gestängeglied 43 an, das wiederum um die Gelenkachse 14 für den Greifer 11 beweglich ist. Auf diese Art und Weise steht der Greifer 11 mit einem Lenkerparallelogramm in Zwangsführungsverbindung, durch welches sichergestellt wird, daß die Längs- bzw. Drehachse 12 des Greifers immer in einer zur Gleitführung 38 parallelen Lage verbleibt.

Auch bei dem nach Art eines Pantographen arbeitenden Geradführungs-Koppelgetriebe nach Fig. 3 ist es sinnvoll, das an sich ortsfeste Gelenk 29 und die Gleitführung 38 baueinheitlich zusammenzufassen und·dabei parallel zur Längsrichtung der Gleitführung 38 im Kragarm bzw. Ausleger 9 verstellbar vorzusehen, damit die Grundstellung für den Greifer 11 relativ zur Schließeinheit bzw. dem darin sitzenden Spritzwerkzeug den unterschiedlichen Bedürfnissen entsprechend variiert werden kann.

Lediglich der Vollständigkeit halber sei noch erwähnt, daß die Schiebeführungen 22 und 38 der Geradführungs-Koppelgetriebe zusammen mit den ortsfesten Gelenken 19 bzw. 29 auch noch um eine zur Längsrichtung der Schiebeführung parallele Achse am Kragarm bzw. Ausleger 9 winkelverlagerbar und feststellbar aufgehängt werden können, falls das Bedürfnis besteht, das Geradführungs-Koppelgetriebe in einer von der Vertikalen abweichenden Ebene in die Schließeinheit bzw. das darin sitzende Spritzwerkzeug eingreifen zu lassen.

0192134

## Patentansprüche

1. Spritzgießmaschine mit einer, beispielsweise auf der ortsfesten Werkzeugträgerplatte der Schließeinheit adaptierten Vorrichtung zur Spritzling-Entnahme aus dem geöffneten Spritzwerkzeug, bei welcher an einem zur Schließeinheit ausgerichteten Führungsbett ein Schlitten verfahrbar sitzt, der am freien Ende eines als Viergelenk-Koppelgetriebes ausgeführten, sowohl in Betätigungsrichtung der Schließeinheit als auch im wesentlichen quer dazu verstellbaren Stellgliedes einen Spritzling-Greifer trägt, welcher wiederum um eine Achse relativ zum Stellglied winkelverstellbar ist,
d a d u r c h   g e k e n n z e i c h n e t ,
daß das Viergelenk-Koppelgetriebe bzw. Stellglied (10) von einem als Kardan- bzw. Ellypsenlenker oder als Pantograph ausgelegten Geradführungs-Koppelgetriebe (16 bis 22; Figur 2) bzw. (29 bis 40; Figur 3) gebildet ist, dessen Schiebeführung (21, 22; Figur 2) bzw. (37, 38; Figur 3) am Schlitten (8, 9) quer zur Bewegungsrichtung (23; Figur 1) seines freien, den Greifer (11) tragenden, Endes ausgerichtet ist.

2. Spritzgießmaschine nach Anspruch 1,
d a d u r c h   g e k e n n z e i c h n e t ,
daß der den Spritzling-Greifer (11) tragende Lenker bzw. Arm (16; Fig. 1 und 2 bzw. 32; Fig. 4) in seiner Längsrichtung mehrfach abgewinkelt ausgebildet ist und dabei sämtliche Abwinklungen in der Bewegungsebene des Geradführungs-Koppelgetriebes (16 bis 22; Fig. 2 bzw. 29 bis 40; Fig. 3) liegen.

3. Spritzgießmaschine nach einem der Ansprüche 1 und 2, **d a d u r c h   g e k e n n z e i c h n e t ,** daß dem den Spritzling-Greifer (11) tragenden Arm (32; Fig. 5) zusätzliche Gestängeglieder (42 bis 45) zur Bildung einer Greifer-Parallelführung zugeordnet ist.

4. Spritzgießmaschine nach einem der Ansprüche 1 bis 3, **d a d u r c h   g e k e n n z e i c h n e t ,** daß der schlittenseitige, ortsfeste Systempunkt (19; Fig. 2 bzw. 29; Fig. 3) des Geradführungs-Koppelgetriebes (16 bis 22; Fig. 2 bzw. 29 bis 40; Fig. 3) am einen Ende der Schiebeführung (22 bzw. 38) zusammen mit dem ortsfesten Systempunkt (19 bzw. 29) in Richtung der Bewegungsebene des Geradführungs-Koppelgetriebes (16 bis 22; Fig. 2 bzw. 29 bis 40; Fig. 3) am Schlitten (8, 9) verlagerbar (27) und feststellbar angeordnet ist. (Fig. 2).

5. Spritzgießmaschine nach einem der Ansprüche 1 bis 4, **d a d u r c h   g e k e n n z e i c h n e t ,** daß die Schiebeführung (22 bzw. 38) und der ortsfeste Systempunkt (19 bzw. 29) des Geradführungs-Koppelgetriebes (16 bis 22; Fig. 2 bzw. 29 bis 40; Fig. 3) um eine zur Längsrichtung der Schiebeführung (22 bis 138) parallele Achse am Schlitten (8, 9) winkelverlagerbar und feststellbar aufgehängt sind.

6. Spritzgießmaschine nach einem der Ansprüche 1 bis 5, **d a d u r c h   g e k e n n z e i c h n e t ,** daß der daß Stellglied tragende Schlitten (8, 9) an einem im wesentlichen quer zur Betätigungsrichtung der Schließeinheit (1) ausgerichteten Führungsbett (7) verfahrbar sitzt.

0192134

7. Spritzgießmaschine nach einem der Ansprüche 1 bis 5,
   **d a d u r c h   g e k e n n z e i c h n e t ,**
   daß das Stellglied (10) am Schlitten (8, 9) als ein sowohl
   in Aufwärtsrichtung als auch in Betätigungsrichtung der
   Schließeinheit (1) verstellbares (23, 26; Fig. 1) Hängeglied ausgebildet ist, daß an seinem unteren Ende den
   Spritzling-Greifer (11) trägt.

8. Spritzgießmaschine nach einem der Ansprüche 1 bis 7,
   **d a d u r c h   g e k e n n z e i c h n e t ,**
   daß der Spritzling-Greifer (11) am unteren Ende des als
   Hängeglied angeordneten Stellgliedes (10) um mindestens
   zwei jeweils rechtwinklig zueinander gerichtete Gelenke
   (12, 14) winkelverstellbar gehalten ist.

Fig. 1

Fig. 2

Fig. 4

Fig. 5

Fig. 3